# EUROPEAN PATENT SPECIFICATION

(11) **EP 1 020 885 B1**
(45) Date of publication and mention of the grant of the patent: **19.12.2012**
(21) Application number: 00660005.0
(22) Date of filing: 14.01.2000
(51) Int. Cl.: H01H 33/24

(54) **Electric field controller**
Vorrichtung zur Kontrolle des elektrischen Feldes
Dispositif pour le contrôle du champ électrique

(30) Priority: 18.01.1999 FI 990084
(43) Date of publication of application: 19.07.2000
(73) Proprietor: ABB Technology AG, 8050 Zürich (CH)
(72) Inventor: Autio, Rauno, 65320 Vaasa (FI)
(74) Representative: Niemi, Hakan Henrik

(56) References cited:
- EP-A- 0 004 662
- EP-A- 0 661 788
- DE-A- 2 037 484
- DE-A- 2 125 788
- DE-A- 2 442 405
- JP-U- 58 053 332

## Description

### FIELD OF THE INVENTION

The invention relates to an electric field controller to be used with connections of energized parts in high and/or mid voltage apparatuses for controlling an electric field formed around the connections, the electric field controller comprising a curved body conducting electricity and being fixedly connected with the energized parts of the apparatuses.

### BACKGROUND OF THE INVENTION

Electric field controllers are used in high and mid voltage apparatuses at extension and connection points in high and mid voltage busbar systems and cables therein or in other devices in the apparatuses. Owing to the design of the components to be connected such as busbars, cables, fuses or the like and the connection components to be used such as connectors, connection screws or the like sharp edges are formed therewith at the extension and connection points. These edges form discontinuities in the electric field surrounding the components, and the density D of the electric flux Ψ directed outwards from the components in said edge parts per each surface area S (D = dΨ / dS) increases, which is why they often operate as starting points of impulse voltage discharges - flashovers - caused by disturbance voltages. Furthermore, as apparatuses evolve the external dimensions thereof are reduced, which results in a reduction of the insulating airspace between energized parts and earthed body parts.

Climatic features, thunder in general, are the main cause for overvoltages, which appear in the apparatuses through an electric network or which are created in the apparatuses, and for flashovers created on account thereof. When testing the impulse voltage endurance of the apparatuses five-fould impulse voltages are used in comparison with the nominal voltage of the apparatus, the form of the impulse voltage corresponding to the form of an overvoltage caused by thunder.

The problem described above can be solved by employing at the extension and connection points an electric field controller, which is curved and forms a domed-shaped or spherical cover around the connection point and the components thereof in order to protect them. The electric field controller forms around the connection point an equipotential surface having the same voltage as the energized parts of the connection. The equipotential surface has no sharp edges, where the electric flux density would increase and which would operate as starting points for the impulse voltage discharges. The electric field controller thus enables to control the electric field generated between the energized parts and the earthed parts of the apparatuses in a controlled way and prevents flashovers to the earthed body parts of the apparatuses, thus improving the impulse voltage endurance of the apparatus. The use of the electric field controller also allows to shape the connection components within the cover more freely.

It is previously known in the art to produce an electric field controller of metal, such as aluminium or cast resin, including a metallic electric field controller and to fasten such an electric field controller to the connection point of a voltage busbar and a cable using a screw. However, the prior art electric field controller involve several drawbacks.

A metallic electric field controller is difficult to form so as not to include sharp edges which are inconvenient for the control of an electric field. The metal or cast resin surface is liable to dents hampering the operation of the electric field controller and to other transformations occurring in connection with installation, as even minor sharp edges substantially impair the operation of an electric field controller. The structure of the electric field controller made of metal or cast resin is stiff, and sets requirements on the time for mounting the electric field controller in position when assembling the apparatus. An electric field controller having a stiff structure also impedes the assembly by reducing the assembling space within.

The individual mould and production costs of an electric field controller made of metal and cast resin are often high and the need for material during production may be high, and consequently the electric field controllers become very heavy.

DE 2442405A discloses an electric field controller comprising a hollow body comprising curved portions and an electric material layer conducting electricity being arranged inside the body.

### BRIEF DESCRIPTION OF THE INVENTION

It is an object of the invention to provide an electric field controller so as to solve said problems. This is achieved with the electric field controller according to claim 1.

The preferred embodiments of the invention are disclosed in the dependent claims.

The invention is based on the idea that by producing an electric field controller of elastic material, the electrical conductivity of which preferably being conductive or semi-conductive, an electric field controller is achieved that in relation to field control is made into a preferable shape, is durable, light and flexible regarding installation and easy to mount and to bend.

Several advantages are achieved with the electric field controller of the invention in comparison with an electric field controller having a stiff structure. An elastic electric field controller can be mounted in position at the connection as the last item after the other components have been mounted. Mounting is simply carried out by stretching or pulling the electric field controller around the connection. If the elastic electric field controller cannot be mounted in position before the other components have been mounted, the elastic material allows the electric field controller to be stretched or compressed in order to reveal the connection during installation, in which case the installation space to be used is increased. An elastic material endures dents better than a stiff material without substantially damaging the properties of the electric field controller associated with the control of the electric field. The chance for an elastic material to be damaged during installation is also inferior to that of a stiff material.

An electric field controller made of elastic material remains in position owing to the tensile force and friction resulting from the elasticity of the material, wherefore no screws or other separate parts are needed for fastening the electric field controller into position. Since no through holes required by screws or other separate parts are needed in the structure, the electric field controller can in relation to the electric field control be shaped into a more preferable form.

In comparison with a stiff material the use of an elastic material allows the electric field controller to be shaped more preferably at the connections of various energized components. Therefore, no particular attention has to be paid on shaping the connector components to be used on the connections to be as curved as possible. The same connector components can be used at connections of various requirement levels, since with a more demanding connection the electric field controller controls the electric field generated around the connector.

The elastic material is formed more closely and more preferably at the connection point and forms, if the connection type allows it, a closed dome-shaped structure around the connection. It is easier to shape an elastic material than a stiff material into a preferable form in relation to the electric field control, thus referring to equally curved surfaces at all edges of the electric field controller.

The mould and production costs of an elastic electric field controller are more advantageous than those an electric field controller made of metal or cast resin. This is economically significant, since the structure and form of the electric field controller varies according to the place of use and the type of connector, and consequently a plurality of electric field controllers shaped in various ways may be needed.

### BRIEF DESCRIPTION OF THE DRAWINGS

In the following the invention will be described by means of the preferred embodiments with reference to the accompanying drawings, in which
Figure 1 is a cross sectional side view showing a spherical electric field controller to be used with an ending voltage busbar,
Figure 2 shows the electric field controller of Figure 1 seen from below,
Figure 3 is a schematic view seen obliquely from the top showing a cylindrical electric field controller used with a fuse connection, a through hole being made into the body of the electric field controller for a release device,
Figure 4 is a vertical cross section showing the electric field controller of Figure 3, and
Figure 5 shows the electric field controller of Figure 3 seen from below.

### DETAILED DESCRIPTION OF THE INVENTION

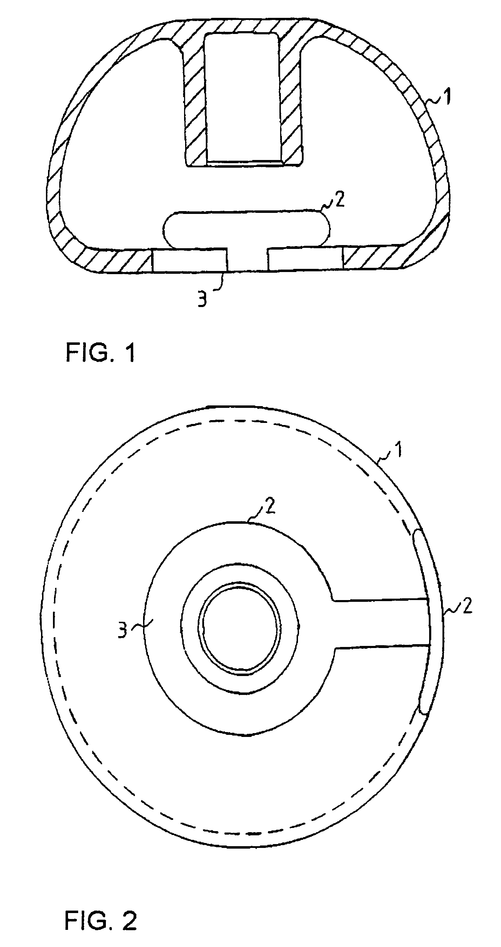

Figures 1 and 2 show a preferred embodiment of an electric field controller of the invention, a semi-spherical electric field controller. The electric field controller according to this embodiment is used with an ending voltage busbar connection.

The electric field controller comprises a dome-shaped body 1, in which all surface parts are curved. The body is hollow and made of elastic material and the electrical conductivity thereof is essentially semi-conductive or conductive. Through holes 2 are formed into the side and skirt of the electric field controller body 1 for placing the electric field controller at the voltage bus-material and the electrical conductivity thereof is essentially semi-conductive or conductive. Through holes 2 are formed into the side and skirt of the electric field controller body 1 for placing the electric field controller at the voltage busbar connection. The through holes at the side 2 and the skirt 3 of the electric field controller body 1 are formed so as to place the electric field controller on the connection firmly providing a fixed contact with the energized parts surrounding it and forming an equipotential surface having the same voltage as said parts. The electric field controller body 1 forms a dome-shaped cover controlling the electric field around the connector components, whereby the connector components surrounding the controller can be formed preferably in relation to the making of the connection without having to take into account the effect the form of the connector components causes to the impulse voltage endurance.

The body 1 is made of an elastic and flexible material that reverts to its original form after a transformation caused. On account of the flexible mouldability the electric field controller is mounted in position by causing a required transformation to the controller by pulling or stretching the electric field controller around the connection. Owing to the elasticity the skirt 3 of the electric field controller closes towards the connection and the electric field controller is then placed firmly around the connection and stays in position on account of the tensile force generated by friction and the elasticity of the material. Hence, the skirt 3 of the electric field controller also operates as a fastening means that fastens the electric field controller to the connection and no through holes or recesses required by separate fastening means, such as screws, have to be formed in the electric field controller body 1. The elastic material that reverts to its original form after transformation is not liable to be damaged either.

The electric field controller body 1 is produced of a material, whose electrical conductivity is essentially semi-conductive or conductive. The material is, for example, an EPDM rubber which is tempered to be semi-conductive with carbon, the resistivity of the rubber is, for example, ρ ≥ 0,052 Ωm. Since the electrical conductivity of the material is conductive or semi-conductive the electric field controller is at the same potential level with the connection components of the busbar when mounted in position.

The structure of the electric field controller body 1 resembles a cover and the inner part thereof is preferably hollow. As to the control of the ler body 1 improves the manageability of the electric field controller when mounting is carried out. In addition the hollow structure reduces the consumption of production material and makes the electric field controller light in weight.

The structure of the electric field controller body 1 may comprise one or more layers, the electrical conductivity of which varies or which are made of various materials. Then a layer composed of an insulating material or of an electrically conductive material and transforming the electric field control properties can be formed on the outer, inner or intermediate layer forming the electric field controller.

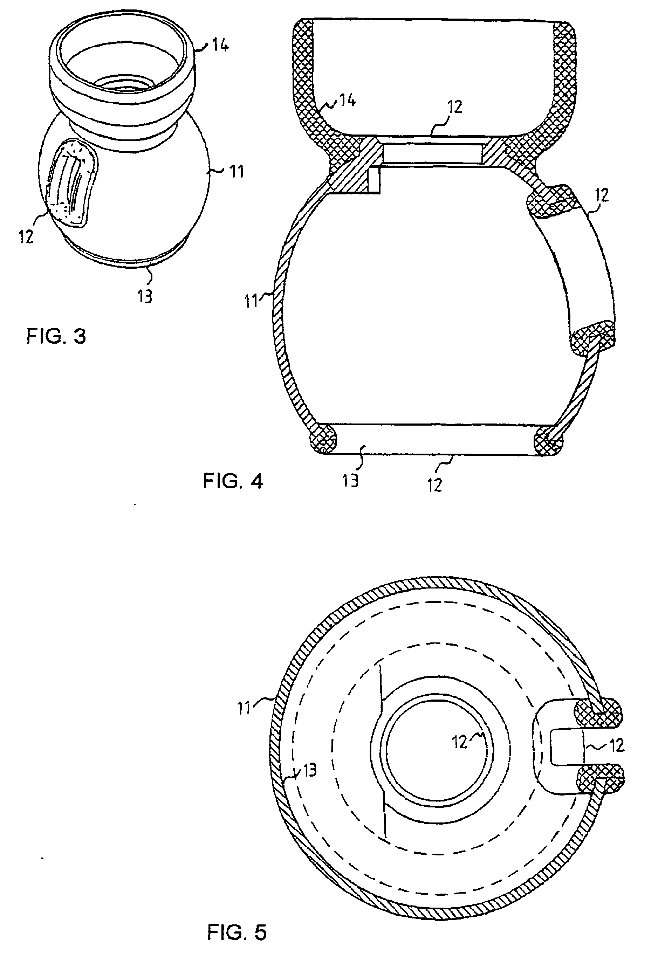

Figures 3, 4 and 5 disclose a preferred embodiment of the invention showing a cylindrical electric field controller. The electrical field controller according to this embodiment is used, for example, with fuse and switch connections.

The cylindrical electric field controller comprises a spherical body 11, in which all surface parts are curved. The body is hollow and made of elastic material and the electrical conductivity thereof is essentially semi-conductive or conductive. In Figures 4 and 5 the semi-conductive or conductive material is hatched. One or more through holes 12 are formed in the electric field controller body 11 in order to place voltage busbars and cables, as well as connection, release, power transmission and/or other corresponding means into position. The through hole in the lower part of the electric field controller body 11 is a skirt 13 and the through hole in the upper part is a collar 14. Additional through holes are formed in the electric field controller body 11 if needed. The body 11 forms a spherical cover controlling the electric field around the connection components, and the components forming the connection are positioned inside the cover. As to the production of the connection components surrounding the controller said components can then be formed preferably without having to take into account the effect the form of the connection components causes to the impulse voltage endurance of the connection.

The edges of the electric field controller body 11, the skirt 13, the collar 14 and of other through holes are made of a material which is elastic, flexible and reverts to its original form after a transformation caused. On account of the flexible mouldability, the electric field controller is put into position by causing a required transformation to the controller by pulling and stretching flexible and reverts to its original form after a transformation caused. On account of the flexible mouldability, the electric field controller is put into position by causing a required transformation to the controller by pulling and stretching the electric field controller to the connection. After this the electric field controller stays put on account of the tensile forces generated by friction and the elasticity of the material. Owing to the elasticity the skirt 13 of the electric field controller closes towards the connection and is then placed as firmly as possible at the connection. The material which is elastic and easily reverts into its original form after transformation is not liable to damage either.

The collar 14 of the cylindrical electric field controller functions as the fastening means when the controller is fastened to the energized components. Then no through holes or recesses required by other types of fastening means, such as screws, need to be formed in the electric field controller body 11. The material of the collar 14 is essentially electricity insulating. In an embodiment of the invention the collar 14 is fastened onto the outer surface of the body 11, in which case the electric field controller body 11 in the through hole 12 of the collar 14 is fastened so as to provide a fixed contact with the energized parts of the connection forming an equipotential surface having the same voltage as said parts.

The electric field controller body 11 is made of an elastic material, whose electrical conductivity is essentially semi-conductive or conductive. In Figure 1 the semi-conductive or conductive material is hatched. The material is, for example, an EPDM rubber which is tempered to be semi-conductive with carbon, the resistivity of the rubber is, for example, ρ ≥ 0,052 Ωm. Since the electrical conductivity of the material is conductive or semi-conductive the electric field controller is at the same potential level with the connection components of the busbar system when mounted in position.

The structure of the electric field controller body 11 resembles a cover and the inner part thereof is preferably hollow. As to the control of the electric field, the electric field controller having a curved surface and the same voltage as the energized parts of the apparatus provides the required control properties of the electric field. The hollow structure of the electric field controller body 11 improves the manageability of the electric field controller when mounting is carried out. In addition the hollow structure reduces the consumption of production material and makes the electric field controller light in weight of an electrically conductive material and transforming the electric field control properties can be formed on the outer, inner or intermediate layer forming the electric field controller.

Edgings made of a material insulating electricity are arranged at the edges of the through holes of the electric field controller, such as the skirt 13 and the collar 14 and the like. In Figures 4 and 5 the material insulating electricity is checkered. Discontinuity points are formed in the spherical semi-conductive electrical field controller body 11 at the skirt 13, the collar 14 and other through holes. These openings form discontinuity points to the electric field surrounding the electric field controller, wherefore the edges of said through holes can function in the apparatuses as starting points of the impulse voltage discharge caused by disturbance voltage. By arranging the edgings made of an insulating material at the edges of the through holes of the semi-conductive body 11 the form of the electric field can be shaped at the through hole edges to be preferable regarding the flashover endurance.

Even though the invention has above been described with reference to only two preferred embodiments presented as examples, it is obvious that the invention is not restricted thereto but can be modified in various ways within the scope of the claims.

## Claims

1. An electric field controller to be used with connections of energized parts in high and/or mid voltage apparatuses for controlling and adapted to control an electric field formed around the connections, the electric field controller comprising a curved, at least partly hollow body (1, 11) conducting electricity and being fixedly connected with the energized parts of the apparatuses, **characterized in that** the body (1, 11) of the electric field controller is made of an elastic and flexible material that reverts to its original form after pulling or stretching the electric field controller around the connection.

2. An electric field controller as claimed in claim 1 **characterized in that** the electric field controller is made of a material which is at least partly semi-conductive.

3. An electric field controller as claimed in claim 1, **characterized in that** the electric field controller is made of a material which is at least partly conductive.

4. An electric field controller as claimed in claims 1, 2, or 3, **characterized in that** the electric field controller body (1, 11) comprises one or more layers.

5. An electric field controller as claimed in claim 4, **characterized in that** the layers are of various materials.

6. An electric field controller as claimed in claim 4 or 5, **characterized in that** the layers of the electric field controller body (1, 11) are made of materials having different electrical conductivities.

7. An electric field controller as claimed in any one of the preceding claims, **characterized in that** the electric field controller body comprises one or more through holes (2, 12) for receiving voltage busbars and cables, and connection, release, power transmission and/or other corresponding means.

8. An electric field controller as claimed in any one of the preceding claims, **characterized in that** the electric field controller body comprises a skirt (3, 13) and/or a collar (14) closing upon the connection.

9. An electric field controller as claimed in any one of the preceding claims, **characterized in that** the electric field controller body (1, 11) comprises fastening means, for example the skirt (3, 13) and/or the collar (14), for arranging the electric field controller at the connections of the energized parts in the apparatuses.

10. An electric field controller as claimed in any one of the preceding claims, **characterized in that** a material, whose electrical conductivity is insulating, is arranged at the skirt (3, 13) and/or the collar (14) or the other through holes (2, 12) of the electric field controller for controlling the electric field generated at the edges of the through holes of the electric field controller.

11. An electric field controller as claimed in any one of the preceding claims, **characterized in that** the electric field controller is fastened to the energized parts of the apparatus by means of friction and/or tensile forces.

12. An electric field controller as claimed in any one of the preceding claims, **characterized in that** the radius of curvature of the surface of the electric field controller body (1, 11) varies in the different parts of the electric field controller body (1, 11).

## Patentansprüche

1. Vorrichtung zur Kontrolle des elektrischen Feldes zur Verwendung mit Anschlüssen an unter Strom gesetzten Teilen in Geräten hoher und/oder mittlerer Spannung, welche Vorrichtung angeordnet ist, ein um den Anschlüssen herum gebildetes elektrisches Feld zu kontrollieren, wobei die Vorrichtung zur Kontrolle des elektrischen Feldes einen gekrümmten, mindestens teilweise hohlen Körper (1, 11) aufweist, der Elektrizität leitet und fest mit den unter Strom gesetzten Teilen der Geräte verbunden ist, **dadurch gekennzeichnet, dass** der Körper (1, 11) der Vorrichtung zur Kontrolle des elektrischen Feldes aus einem elastischen und flexiblen Material hergestellt ist, das zu seiner ursprünglichen Form zurückkehrt, nachdem die Vorrichtung zur Kontrolle des elektrischen Feldes um den Anschluss gezogen oder gestreckt worden ist.

2. Eine Vorrichtung zur Kontrolle des elektrischen Feldes gemäß dem Patentanspruch 1, **dadurch gekennzeichnet , dass** die Vorrichtung zur Kontrolle des elektrischen Feldes aus einem Material hergestellt ist, das mindestens teilweise halbleitend ist.

3. Eine Vorrichtung zur Kontrolle des elektrischen Feldes gemäß dem Patentanspruch 1, **dadurch gekennzeichnet, dass** die Vorrichtung zur Kontrolle des elektrischen Feldes aus einem Material hergestellt ist, das mindestens teilweise leitend ist.

4. Eine Vorrichtung zur Kontrolle des elektrischen Feldes gemäß dem Patentanspruch 1, 2 oder 3, **dadurch gekennzeichnet, dass** der Körper (1, 11) der Vorrichtung zur Kontrolle des elektrischen Feldes eine oder mehrere Schichten aufweist.

5. Eine Vorrichtung zur Kontrolle des elektrischen Feldes gemäß dem Patentanspruch 4, **dadurch gekennzeichnet, dass** die Schichten aus unterschiedlichen Materialien bestehen.

6. Eine Vorrichtung zur Kontrolle des elektrischen Feldes gemäß dem Patentanspruch 4 oder 5, **dadurch gekennzeichnet, dass** die Schichten des Körpers (1, 11) der Vorrichtung zur Kontrolle des elektrischen Feldes aus Materialien mit unterschiedlichen elektrischen Leitfähigkeiten hergestellt sind.

7. Eine Vorrichtung zur Kontrolle des elektrischen Feldes gemäß einem der vorhergehenden Patentansprüche, **dadurch gekennzeichnet, dass** der Körper der Vorrichtung zur Kontrolle des elektrischen Feldes eine oder mehrere durchgehende Öffnungen (2, 12) zum Empfang von Spannungsstromschienen und Leitungen und Mittel zum Anschließen, zum Freischalten, zur Kraftübertragung und/oder sonstige entsprechende Mittel aufweist.

8. Eine Vorrichtung zur Kontrolle des elektrischen Feldes gemäß einem der vorhergehenden Patentansprüche, **dadurch gekennzeichnet, dass** der Körper der Vorrichtung zur Kontrolle des elektrischen Feldes eine Ummantelung (3, 13) und/oder eine Muffe (14) aufweist, die sich an den Anschluss anlegen.

9. Eine Vorrichtung zur Kontrolle des elektrischen Feldes gemäß einem der vorhergehenden Patentansprüche, **dadurch gekennzeichnet, dass** der Körper (1, 11) der Vorrichtung zur Kontrolle des elektrischen Feldes Befestigungsmittel aufweist, beispielsweise die Ummantelung (3, 13) und/oder die Muffe (14), um die Vorrichtung zur Kontrolle des elektrischen Feldes an den Anschlüssen der unter Strom gesetzten Teile in den Geräten anzuordnen.

10. Eine Vorrichtung zur Kontrolle des elektrischen Feldes gemäß einem der vorhergehenden Patentansprüche, **dadurch gekennzeichnet, dass** ein Material, dessen elektrische Leitfähigkeit isolierend ist, an der Ummantelung (3, 13) und/oder an der Muffe (14) oder an den anderen durchgehenden Öffnungen (2, 12) der Vorrichtung zur Kontrolle des elektrischen Feldes angeordnet ist, um das an den Rändern der durchgehenden Öffnungen der Vorrichtung zur Kontrolle des elektrischen Feldes erzeugte elektrische Feld zu kontrollieren.

11. Eine Vorrichtung zur Kontrolle des elektrischen Feldes gemäß einem der vorhergehenden Patentansprüche, **dadurch gekennzeichnet, dass** die Vorrichtung zur Kontrolle des elektrischen Feldes mit Hilfe von Friktions- oder Zugfestigkeitskräften an den unter Strom gesetzten Teilen des Gerätes befestigt ist.

12. Eine Vorrichtung zur Kontrolle des elektrischen Feldes gemäß einem der vorhergehenden Patentansprüche, **dadurch gekennzeichnet, dass** der Radius der Krümmung der Oberfläche des Körpers (1, 11) der Vorrichtung zur Kontrolle des elektrischen Feldes in verschiedenen Teilen des Körpers (1, 11) der Vorrichtung zur Kontrolle des elektrischen Feldes variiert.

## Revendications

1. Contrôleur de champ électrique destiné à être utilisé avec des connexions de parties sous tension dans des appareils à haute et/ou moyenne tension et adapté pour contrôler un champ électrique formé autour des connexions, le contrôleur de champ électrique comprenant un corps incurvé au moins en partie creux (1, 11) conduisant l'électricité et étant connecté de manière fixe avec les parties sous tension des appareils, **caractérisé en ce que** le corps (1, 11) du contrôleur de champ électrique est constitué d'un matériau élastique et souple qui revient à sa forme originale après avoir étiré ou étendu le contrôleur de champ électrique autour de la connexion.

2. Contrôleur de champ électrique selon la revendication 1, **caractérisé en ce que** le contrôleur de champ électrique est constitué d'un matériau qui est au moins en partie semi-conducteur.

3. Contrôleur de champ électrique selon la revendication 1, **caractérisé en ce que** le contrôleur de champ électrique est constitué d'un matériau qui est au moins en partie conducteur.

4. Contrôleur de champ électrique selon les revendications 1, 2 ou 3, **caractérisé en ce que** le corps (1, 11) du contrôleur de champ électrique comprend une ou plusieurs couches.

5. Contrôleur de champ électrique selon la revendication 4, **caractérisé en ce que** les couches sont en divers matériaux.

6. Contrôleur de champ électrique selon la revendication 4 ou 5, **caractérisé en ce que** les couches du corps (1, 11) du contrôleur de champ électrique sont constituées de matériaux ayant des conductivités électriques différentes.

7. Contrôleur de champ électrique selon l'une quelconque des revendications précédentes, **caractérisé en ce que** le corps du contrôleur de champ électrique comprend un ou plusieurs trous débouchants (2, 12) pour recevoir des barres conductrices de courant et des câbles, et des moyens de connexion, de libération, de transmission de puissance et/ou d'autres moyens correspondants.

8. Contrôleur de champ électrique selon l'une quelconque des revendications précédentes, **caractérisé en ce que** le corps du contrôleur de champ électrique comprend une jupe (3, 13) et/ou un collier (14) se rapprochant de la connexion.

9. Contrôleur de champ électrique selon l'une quelconque des revendications précédentes, **caractérisé en ce que** le corps (1, 11) du contrôleur de champ électrique comprend des moyens d'attache, par exemple la jupe (3, 13) et/ou le collier (14), pour agencer le contrôleur de champ électrique au niveau des connexions des parties sous tension dans les appareils.

10. Contrôleur de champ électrique selon l'une quelconque des revendications précédentes, **caractérisé en ce qu'**un matériau, dont la conductivité électrique est isolante, est agencé au niveau de la jupe (3, 13) et/ou du collier (14) ou des autres trous débouchants (2, 12) du contrôleur de champ électrique pour contrôler le champ électrique généré au niveau des bords des trous débouchants du contrôleur de champ électrique.

11. Contrôleur de champ électrique selon l'une quelconque des revendications précédentes, **caractérisé en ce que** le contrôleur de champ électrique est attaché aux parties sous tension de l'appareil au moyen de forces de frottement et/ou de traction.

12. Contrôleur de champ électrique selon l'une quelconque des revendications précédentes, **caractérisé en ce que** le rayon de courbure de la surface du corps (1, 11) du contrôleur de champ électrique varie dans les différentes parties du corps (1, 11) du contrôleur de champ électrique.
